# EUROPEAN PATENT APPLICATION

(11) **EP 4 541 561 A1**
(43) Date of publication of application: **23.04.2025**
(21) Application number: 23839451.4
(22) Date of filing: 26.06.2023
(51) Int. Cl.: B29C 64/393, B22F 10/85, B33Y 50/02, G05B 19/4093

(54) **CONTROL INFORMATION GENERATING DEVICE, CONTROL INFORMATION GENERATING METHOD, AND PROGRAM**

(30) Priority: 15.07.2022 JP 2022114006
(71) Applicant: KABUSHIKI KAISHA KOBE SEIKO SHO (KOBE STEEL, LTD.), Hyogo 651-8585 (JP)
(72) Inventor: CHIKAGUCHI, Satoshi, Nishi-ku, Kobe-shi, Hyogo 651-2271 (JP); HUANG, Shuo, Nishi-ku, Kobe-shi, Hyogo 651-2271 (JP)
(74) Representative: Müller-Boré & Partner Patentanwälte PartG mbB
(86) International application number: PCT/JP2023/023679
(87) International publication number: WO 2024/014277

(57) **Abstract**

A control information generating device includes: a manufacturing information acquisition unit configured to acquire information on manufacturing paths; a connection position specifying unit configured to specify, from the acquired information on the manufacturing paths, connection positions at which a pair of manufacturing paths arranged adjacent to each other and having continuous formation order are connected to each other; a path connection unit configured to newly add a connection path that connects the pair of manufacturing paths to each other at the connection positions, and connect the pair of manufacturing paths to each other; and a control information output unit configured to repeat connection between the manufacturing paths until the number of the manufacturing paths becomes equal to or less than a predetermined upper limit, and output the information on the connected manufacturing paths as the control information.

## Description

### TECHNICAL FIELD

The present invention relates to a control information generating device, a control information generating method, and a program.

### BACKGROUND ART

In recent years, there has been an increasing need for manufacturing a component by additive manufacturing using a 3D printer, and research and development is underway to implement manufacturing using a slab metal material. For example, Patent Literature 1 proposes a method of improving manufacturing quality by correcting a bead forming trajectory (manufacturing paths) in additive manufacturing so as to reduce the overlap of beads and the deviation of a processing material. In this method, the manufacturing paths are corrected after a bead width is adjusted based on the manufacturing paths and a reference width of a bead cross section.

### CITATION LIST

### PATENT LITERATURE

Patent Literature 1: JPS47-011817B

### SUMMARY OF INVENTION

### TECHNICAL PROBLEM

In the additive manufacturing, a plurality of manufacturing paths are adjacently arranged in various styles to manufacture a desired shape. In the manufacturing paths, as the number of paths increases, the number of start parts and end parts also increases, and a frequency of stopping the manufacturing increases. Therefore, from the viewpoint of productivity, there is a demand for reducing the number of manufacturing paths as much as possible. However, as the shape of a manufactured object becomes more complicated, the types of manufacturing paths that can be generated are limited, and thus it is difficult to uniformly reduce the number of paths. In view of such circumstances, there is a demand for the development of a general-purpose method of reducing the number of paths. Patent Literature 1 describes a method of correcting manufacturing paths, but does not mention reducing the number of manufacturing paths.

Accordingly, an object of the present invention is to provide a control information generating device, a control information generating method, and a program capable of generating control information that improves productivity by reducing the number of manufacturing paths that form beads without making a large change from the original manufacturing paths.

### SOLUTION TO PROBLEM

The present invention has the following configuration.
(1) A control information generating device that repeatedly forms a bead layer having a layer shape using a bead formed by adding a molten processing material to a manufacturing target surface while moving a processing position along manufacturing paths set in advance, and generates control information for controlling an additive manufacturing device that manufactures a three-dimensional shape in which the bead layer is deposited, the device including:
   a manufacturing information acquisition unit configured to acquire information on the manufacturing paths;
   a connection position specifying unit configured to specify, from the acquired information on the manufacturing paths, connection positions at which a pair of manufacturing paths arranged adjacent to each other and having continuous formation order are connected to each other;
   a path connection unit configured to newly add a connection path that connects the pair of manufacturing paths to each other at the connection positions, and connect the pair of manufacturing paths to each other; and
   a control information output unit configured to repeat connection between the manufacturing paths until the number of the manufacturing paths becomes equal to or less than a predetermined upper limit, and output the information on the connected manufacturing paths as the control information.
(2) A control information generating method of repeatedly forming a bead layer having a layer shape using a bead formed by adding a molten processing material to a manufacturing target surface while moving a processing position along manufacturing paths set in advance, and generating control information for controlling an additive manufacturing device that manufactures a three-dimensional shape in which the bead layer is deposited, the method including:
   acquiring information on the manufacturing paths;
   specifying, from the acquired information on the manufacturing paths, connection positions at which a pair of manufacturing paths arranged adj acent to each other and having continuous formation order are connected to each other;
   newly adding a connection path that connects the pair of manufacturing paths to each other at the connection positions, and connecting the pair of manufacturing paths to each other; and
   repeating connection between the manufacturing paths until the number of the manufacturing paths becomes equal to or less than a predetermined upper limit, and outputting the information on the connected manufacturing paths as the control information.
(3) A program that repeatedly forms a bead layer having a layer shape using a bead formed by adding a molten processing material to a manufacturing target surface while moving a processing position along manufacturing paths set in advance, and generates control information for controlling an additive manufacturing device that manufactures a three-dimensional shape in which the bead layer is deposited, the program causing a computer to execute:
   a function of acquiring information on the manufacturing paths;
   a function of specifying, from the acquired information on the manufacturing paths, connection positions at which a pair of manufacturing paths arranged adjacent to each other and having continuous formation order are connected to each other;
   a function of newly adding a connection path that connects the pair of manufacturing paths to each other at the connection positions, and connecting the pair of manufacturing paths to each other; and
   a function of repeating connection between the manufacturing paths until the number of the manufacturing paths becomes equal to or less than a predetermined upper limit, and outputting the information on the connected manufacturing paths as the control information.

### ADVANTAGEOUS EFFECTS OF INVENTION

According to the present invention, it is possible to improve productivity by reducing the number of manufacturing paths that form beads without making a large change from the original manufacturing paths.

### BRIEF DESCRIPTION OF DRAWINGS

Fig. 1 is a block configuration view of an additive manufacturing system including a control information generating device.
Fig. 2 is a flowchart showing a changing procedure of manufacturing paths by the control information generating device.
Fig. 3 is an illustrative diagram showing the changing procedure of the manufacturing paths in stages.
Fig. 4 is an illustrative diagram showing connection positions extracted by a connection position specifying unit.
Fig. 5 is an illustrative diagram showing connection positions extracted by the connection position specifying unit.
Figs. 6A and 6B are illustrative diagrams showing another example in which a connection path is added.
Figs. 7A and 7B are illustrative diagrams showing another example in which the connection path is added.
Figs. 8A to 8C are illustrative diagrams showing still another example in which the connection path is added.
Fig. 9A is an illustrative diagram schematically showing a state of beads formed along respective paths shown in Figs. 8A to 8C.
Fig. 9B is an illustrative diagram schematically showing the beads formed when cutting positions of manufacturing paths PS₁ and PS₂ are different from cutting positions shown in Figs. 8A to 8C.
Fig. 9C is an illustrative diagram schematically showing the beads formed when the cutting positions of the manufacturing paths PS₁ and PS₂ are on the same side as connection positions P₁ and P₂.
Fig. 10A is an illustrative diagram showing types of connection paths that connect raster-shaped manufacturing paths.
Fig. 10B is an illustrative diagram showing types of the connection paths that connect the raster-shaped manufacturing paths.
Fig. 10C is an illustrative diagram showing types of the connection paths that connect the raster-shaped manufacturing paths.
Fig. 11 is an illustrative diagram showing a changing procedure of a multiple annular manufacturing path in stages.
Fig. 12 is an illustrative diagram showing another example of the multiple annular manufacturing path.
Fig. 13 is an illustrative diagram of manufacturing paths showing a state in which one layer shape is divided into a plurality of blocks.

### DESCRIPTION OF EMBODIMENTS

Hereinafter, embodiments of the present invention will be described in detail with reference to the drawings. A control information generating device shown here generates control information for controlling an additive manufacturing device that forms a weld bead, but the control target is not limited thereto, and may generate control information for controlling a device using another manufacturing method.

### <Additive Manufacturing System>

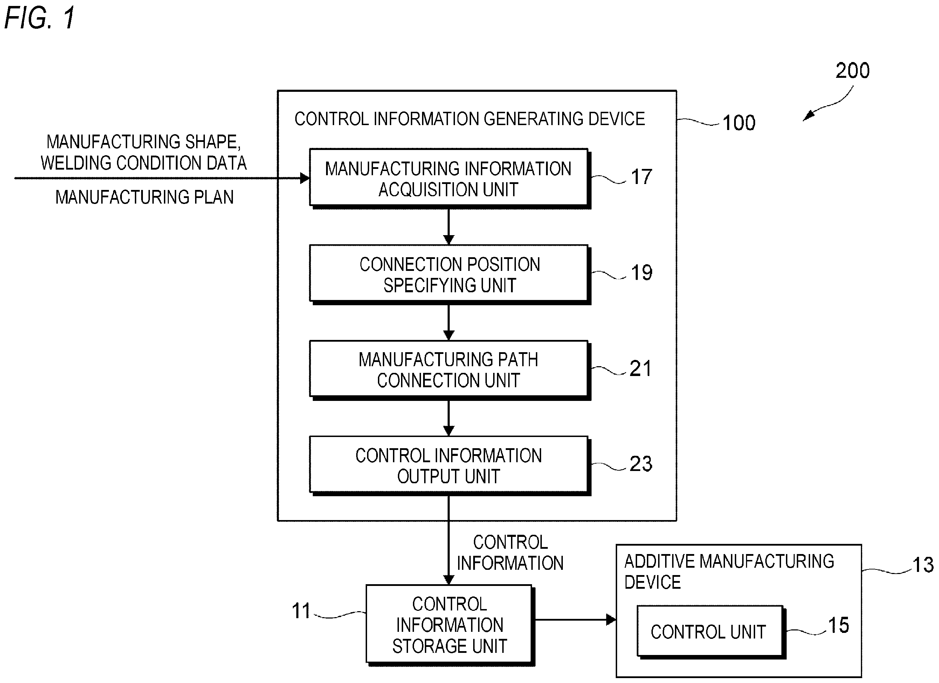

Fig. 1 is a block configuration view of an additive manufacturing system 200 including a control information generating device 100.

The additive manufacturing system includes the control information generating device 100, a control information storage unit 11, and an additive manufacturing device 13. The control information generating device 100 generates control information for controlling the additive manufacturing device 13, and the control information storage unit 11 stores the generated control information in a manner that the control information can be output to the additive manufacturing device 13. Although not shown, the additive manufacturing device 13 includes a weld including a manipulator such as a multi-axis robot that moves a torch, a welding power supply, a filler material feeding mechanism, and the like, and a control unit 15 that controls each unit of the weld. The control unit 15 reads the control information corresponding to a manufactured object having a desired shape from the control information storage unit 11, and controls the weld based on the read control information to manufacture the manufactured object. That is, the additive manufacturing device 13 adds a molten processing material to a manufacturing target surface to form the bead while moving a processing position along a manufacturing path set in advance. A bead layer having a layer shape is repeatedly formed using the bead formed in this way, and a three-dimensional shaped manufactured object in which the bead layer is deposited is manufactured.

The above control information includes a manufacturing program in which the manufacturing path representing a route along which the additive manufacturing device 13 moves the torch for bead formation and command information such as welding conditions at the time of the bead formation is recorded. The manufacturing program includes a large number of command codes, and is created based on an appropriate algorithm according to various conditions such as a shape, a material, and a heat input amount of the manufactured object.

The control information generating device 100 includes a manufacturing information acquisition unit 17, a connection position specifying unit 19, a manufacturing path connection unit 21, and a control information output unit 23, which will be described later in detail. The function of each unit is schematically represented as follows.

The manufacturing information acquisition unit 17 acquires information on a manufacturing shape and the welding conditions of the manufactured object to be manufactured or information on a manufacturing plan including the manufacturing path set by a predetermined algorithm according to the information. The manufacturing path described here is, for example, a movement trajectory of the torch when the torch is moved to form the bead. As the information on the manufacturing shape, for example, CAD data can be used.

The connection position specifying unit 19 extracts a pair of manufacturing paths arranged adjacent to each other and having a continuous formation order from the acquired information on the manufacturing paths, and specifies connection positions at which the pair of manufacturing paths are connected to each other to form one manufacturing path.

The manufacturing path connection unit 21 newly adds, to the manufacturing paths, a connection path that connects the pair of manufacturing paths to each other at the connection positions. Accordingly, the pair of manufacturing paths described above are connected to each other to form one continuous manufacturing path.

The control information output unit 23 repeats the connection between the above manufacturing paths until the number of manufacturing paths becomes equal to or less than a predetermined upper limit. Then, the information on the manufacturing paths connected to each other is output as control information. The control information output unit 23 may have a function of displaying information related to the changed manufacturing paths using an output device (not shown) such as a display provided in the control information generating device 100.

The control information generating device 100 is implemented by, for example, an information processing device such as a personal computer (PC). The function of each unit described above is realized by a processor prepared in each unit reading a program having a specific function and executing the program. Specifically, the processor such as a central processing unit (CPU) and a micro processor unit (MPU) or a dedicated circuit reads and executes a program stored in a memory such as a random access memory (RAM) as a volatile storage area and a read only memory (ROM) as a nonvolatile storage area and a storage such as a hard disk drive (HDD) and a solid state drive (SSD).

### <Changing Procedure of Manufacturing Paths>

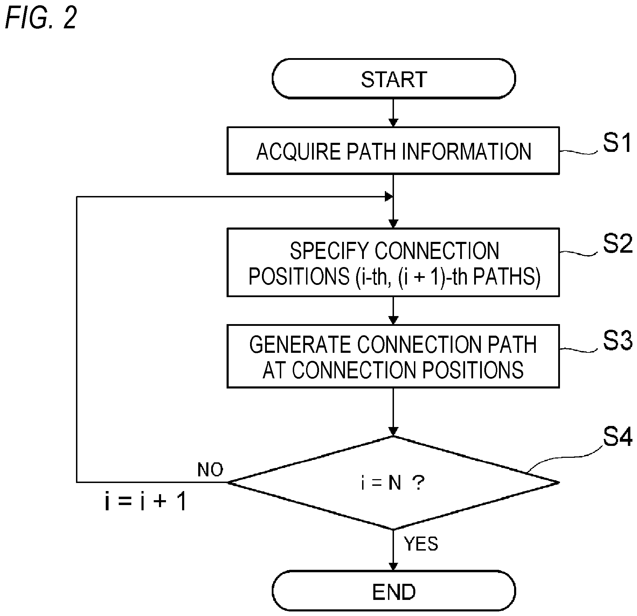

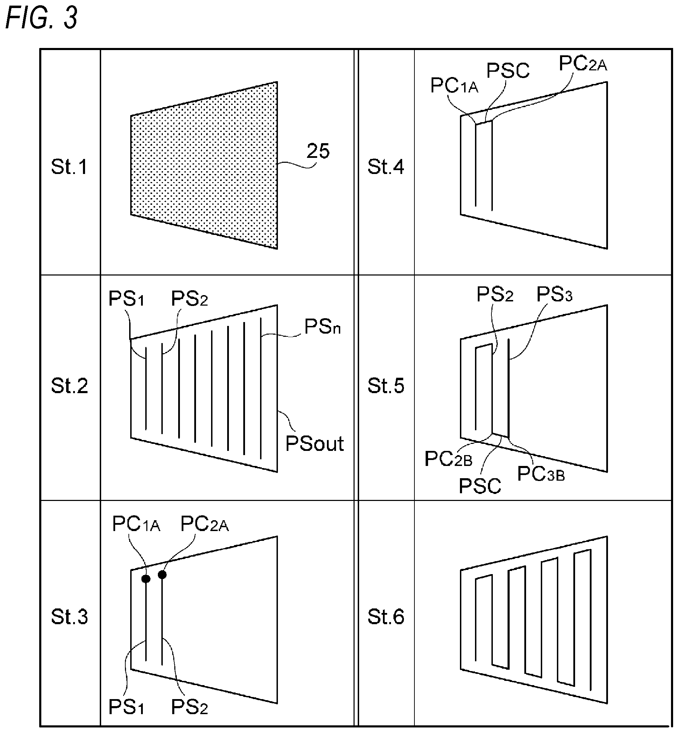

Next, a changing procedure of the manufacturing paths by the control information generating device 100 having the above configuration will be described in detail. Fig. 2 is a flowchart showing the changing procedure of the manufacturing paths by the control information generating device 100. Fig. 3 is an illustrative diagram showing the changing procedure of the manufacturing paths in stages.

First, the manufacturing information acquisition unit 17 acquires information on manufacturing paths of a manufactured object to be manufactured (S1). For example, when the manufacturing plan including the manufacturing paths of the manufactured object to be manufactured is prepared in advance, the manufacturing information acquisition unit 17 reads information on the manufacturing plan and acquires information on the manufacturing paths from the manufacturing plan. The manufacturing paths acquired here are not limited to the shape and the position information related to a straight or curved trajectory, and may include information such as coordinates of points distributed at regular intervals on the trajectory, or a vector indicating a direction of movement when the torch passes over those points.

The manufacturing information acquisition unit 17 may create the manufacturing plan from the input information on the manufacturing shape and the welding conditions and acquire the information on the manufacturing paths. In this case, the manufacturing information acquisition unit 17 obtains a layer shape 25 obtained by dividing a model of the manufacturing shape into layers according to the height of the weld bead, as shown in St. 1 in Fig. 3. Then, as shown in St. 2, by decomposing the obtained layer shape 25 into the shape of the weld bead, a plurality of (a total of n) manufacturing paths PSᵢ (i being 1 to n) for forming the layer shape 25 by the weld bead are obtained. The manufacturing paths that form the layer shape 25 include an annular manufacturing path PS_{OUT} that forms an outer edge of the layer shape 25 and linear manufacturing paths PSᵢ that fill an inside of the annular manufacturing path PS_{OUT}. Here, the plurality of linear manufacturing paths PSᵢ that fills the inside of the annular manufacturing path PS_{OUT} will be described.

The connection position specifying unit 19 extracts a pair of manufacturing paths PSᵢ and PSᵢ₊₁ arranged adjacent to each other and having continuous formation order from the plurality of manufacturing paths PSᵢ provided in the path information indicated by St. 2 or the plurality of manufacturing paths PSᵢ obtained from the above manufacturing plan. Here, for example, manufacturing paths PS₁ and PS₂ are extracted. Then, adjacent end portions PC_{1A} and PC_{2A} of the manufacturing paths PS₁ and PS₂ are specified as the connection positions (S2).

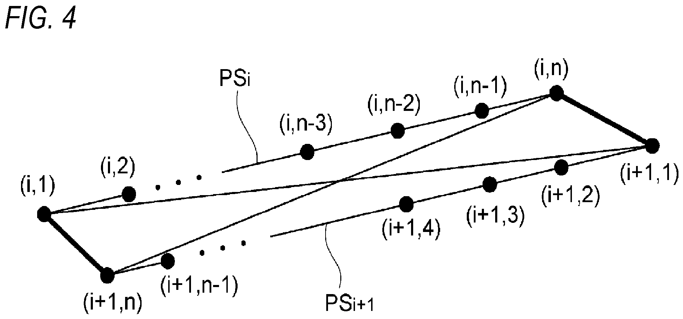

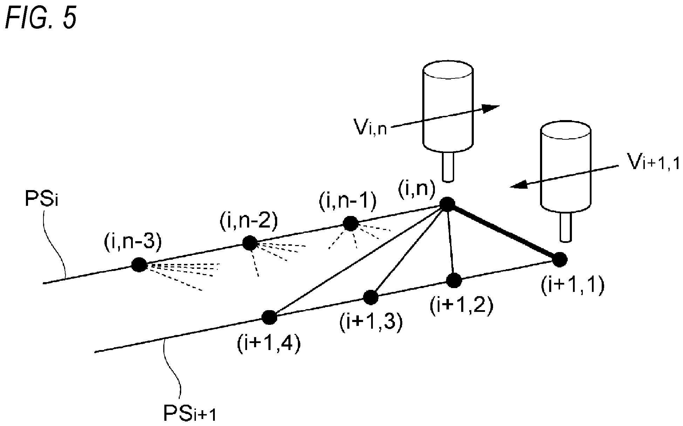

Figs. 4 and 5 are illustrative diagrams showing the connection positions extracted by the connection position specifying unit 19. As shown in Fig. 4, when the connection positions are specified, the connection positions may be specified by extracting a set in which a distance between two points is the shortest among combinations in which two points are selected from end points provided in the pair of manufacturing paths PSᵢ and PSᵢ₊₁. That is, it is assumed that the manufacturing path PSᵢ is a path passing through a point group of (i, 1), (i, 2), ..., (i, n), and the manufacturing path PSᵢ₊₁ is a path passing through a point group of (i + 1, 1), (i + 1, 2), ..., (i + 1, n) (in the above (a, b), a indicating a path number and b indicating a passing order of the torch). In this case, at the point (i, n), a distance between the points connecting (i, n) to (i + 1, 1) is compared with a distance between the points connecting (i, n) to (i + 1, n), and it is determined that the distance between the former points is the shortest, and thus the set of (i, n) and (i+1, n1 is extracted as the connection positions. When the passing order of the torch is not limited, a set of (i, 1) and (i + 1, n) may be extracted as the connection positions by a similar method. That is, the connection position specifying unit 19 specifies, as the connection positions, a set in which an inter-point distance connecting end points is the shortest, of both end points of the manufacturing path and both end points of the manufacturing path adjacent to the manufacturing path.

Alternatively, as shown in Fig. 5, when a point provided in the manufacturing path PSᵢ and a point provided in PSᵢ₊₁ may be selected in a round-robin way, and the respective points are connected by a straight line, features such as an angle formed by the connected straight line and a vector V indicating a moving direction of the straight line and an interval between the selected points may be obtained, and the connection positions may be specified by the obtained feature or a combination of the plurality of features. That is, the connection position specifying unit 19 selects any two points from among the plurality of points on the manufacturing path and the plurality of points on the manufacturing path adjacent to the manufacturing path, and specifies the connection positions according to at least one feature of the angle between the vector in the moving direction of the manufacturing paths at the two selected points and the direction of a connection line of the two points and the inter-point distance when the two points are connected.

As described above, the connection positions are not limited to the end portions of the manufacturing paths PSᵢ and PSᵢ₊₁, and combinations of points present between the manufacturing paths may be specified as the connection positions. Further, the above-described examples may be combined to search for connection positions that simultaneously satisfy the conditions.

The manufacturing path connection unit 21 provides a new connection path PSC at the specified connection positions. That is, the connection path PSC that connects the end portion PC_{1A} to the end portion PC_{2A} of the pair of manufacturing paths PS₁ and PS₂ is added to the present manufacturing paths (S3). The added connection path PSC constitutes one path connecting the manufacturing path PS₁ to the manufacturing path PS₂. Accordingly, the total number of manufacturing paths PSᵢ is reduced by one.

The above processing is similarly performed for the next manufacturing path PSᵢ₊₁ until the number of manufacturing paths reaches a predetermined upper limit N of the total number of paths (S4). As shown in St. 4, a pair of manufacturing paths PS₂ and PS₃ is extracted, and a connection path PSC that connects an end portion PC_{2B} to an end portion PC_{3B} is provided. In this way, as shown in St. 5, each manufacturing path PSi is connected by the connection path PSC.

By connecting the plurality of manufacturing paths to reduce the total number of paths in this way, it is possible to reduce the operation time of arc start and arc end at the time of bead formation and shorten the total manufacturing time. Further, the shape of the bead formed by the arc start and the arc end tends to be different in bead height and bead width from the shape at a bead intermediate position, and the manufacturing shape tends to be unstable. Since the number of areas with the unstable shape can be reduced, the manufacturing accuracy of the manufactured object can be further improved.

Further, since the adjacent paths are connected to each other with the manufacturing paths serving as the base based on the manufacturing plan, no large change is made from the original manufacturing path serving as the base. Accordingly, the change from the original manufacturing plan is kept small, and for example, a situation in which the manufacturing is difficult due to restriction of a torch posture of the additive manufacturing device 13 does not occur.

### <Other Setting of Connection Path>

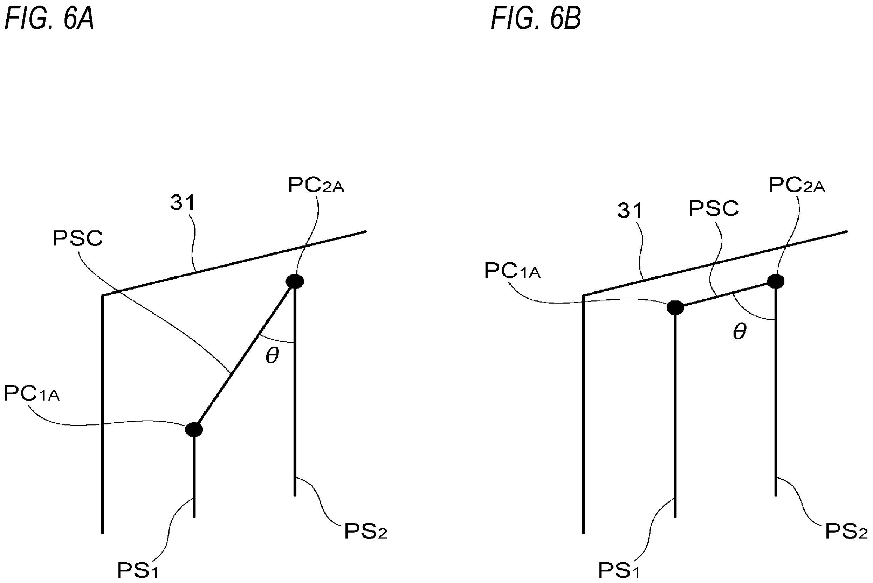

Figs. 6A and 6B are illustrative diagrams showing another example in which the connection path is added.

As shown in Fig. 6A, a line connected to the end portions PC₁ₐ and PC₂ₐ of the manufacturing paths PS₁ and PS₂ arranged adjacent to each other in the formation order is referred to as the connection path PS_{C}, and a smaller intersection angle of intersection angles between the connection path PS_{C} and the manufacturing path PS₂ is defined as θ. In this case, the connection position specifying unit 19 specifies the connection positions such that the intersection angle θ is equal to or greater than a predetermined specified angle.

For example, as shown in Fig. 6A, when the intersection angle θ is about 30°, in the end portion PC_{2A} in which the beads are connected to each other, a cavity is likely to be generated and the bead height and the width are likely to be changed at the time of bead formation, and the manufacturing shape is not stable. Therefore, as shown in (B) of Fig. 6, by making the intersection angle θ close to an obtuse angle, it is possible to prevent the above failure of the beads, and it is possible to form a good bead in the end portion PC_{2A}.

In the example shown in Fig. 6B, the connection positions are specified such that the intersection angle θ is set and a line (connection path PSC) connecting the end portions PC_{1A} and PC_{2A} of the pair of manufacturing paths PS₁ and PS₂ to each other and a wall portion (bead caused by another path or installed object) 31 disposed in the vicinity of the end portions PC_{1A} and PC_{2A} are substantially parallel to each other. In other words, the connection position specifying unit 19 specifies, as the connection positions, positions on the manufacturing paths where the intersection angle θ is equal to or greater than the specified angle. Then, the manufacturing path connection unit 21 provides the connection path PSC at the connection positions. Accordingly, it is possible to form the bead with high shape accuracy even at the connection positions, and it is possible to contribute to improvement of dimensional accuracy of the manufactured object.

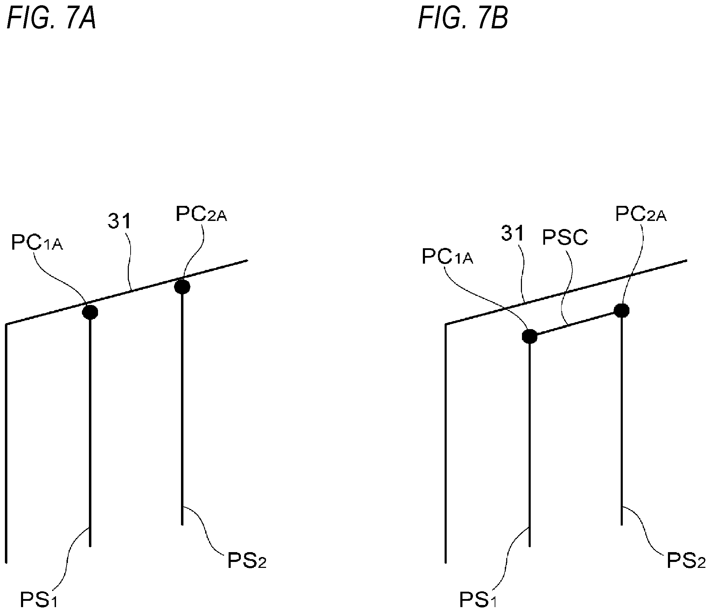

Figs. 7A and 7B are illustrative diagrams showing another example in which the connection path is added.

As shown in Fig. 7A, in a case where the end portion PC_{1A} and PC_{2A} of the pair of manufacturing paths PS₁ and PS₂ are in contact with or close to the facing wall portion (bead caused by another path or installed object) 31, a cavity is formed between the wall portion 31 and the end portion PC_{1A} and PC_{2A}, or a variation in bead height occurs due to fusion with the wall portion 31 at the time of bead formation.

As described above, there is a case where an interval between the end portions PC₁ₐ and PC₂ₐ of the pair of manufacturing paths PS₁ and PS₂ and the wall portion (bead caused by another path or installed object) 31 that the pair of manufacturing paths PS₁ and PS₂ abut on when they extend in a longitudinal direction is equal to or less than a predetermined specified distance. In this case, as shown in Fig. 7B, the connection position specifying unit 19 shifts the end portions PC_{1A} and PC_{2A} in a direction away from the wall portion 31, and specifies the end portions PC_{1A} and PC_{2B} as the connection positions while shortening path lengths of the manufacturing paths PS₁ and PS₂. Then, the manufacturing path connection unit 21 provides the connection path PSC at the specified connection positions. In Fig. 7B, since both the end portions PC_{1A} and PC_{2A} are close to the wall portion 31, both of the end portions are shifted, but if only one end portion is close to the wall portion 31, only the end portion close to the wall portion 31 may be shifted.

Accordingly, the path length of the manufacturing paths PS₁ and PS₂ is shortened, and the total length of all the paths does not significantly increase due to the connection of the manufacturing paths from before the connection. Accordingly, an excessive increase in the volume of the bead to be filled can be prevented compared to the manufacturing plan. Further, by adjusting the path length, it is not necessary to change bead depositing conditions (mainly, the bead width and the overlap amount between the beads) which require strict adjustment.

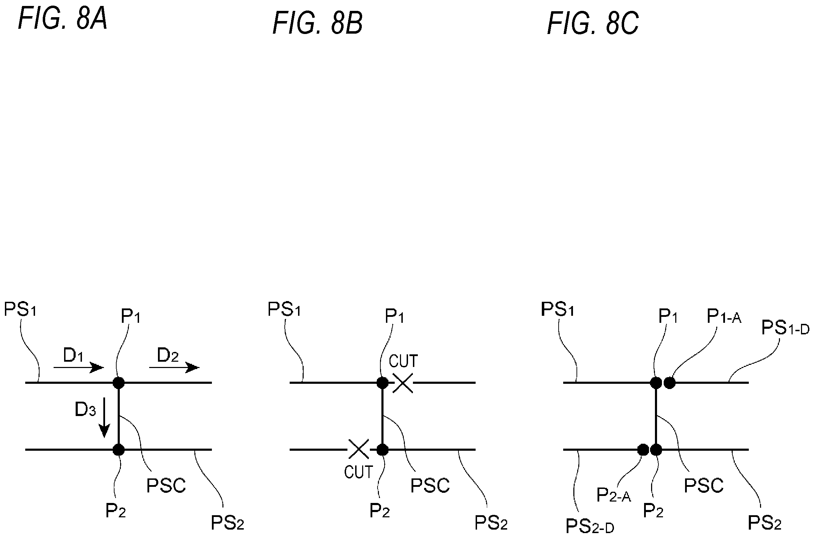

Figs. 8A to 8C are illustrative diagrams showing still another example in which the connection path is added.

As shown in Fig. 8A, intermediate positions of the pair of manufacturing paths PS₁ and PS₂ are set as connection positions, respectively, and the connection path PSC connecting the manufacturing path PS₁ to the manufacturing path PS₂ may be provided at the connection positions. In this case, in the manufacturing path PS₁, when reaching the connection position P₁ along a bead formation direction D₁, the path branches into a direction D₂ in which the original manufacturing path PS₁ extends and a direction D₃ in which the connection path PSC extends. Similarly, the path branches into two directions at the connection position P₂ in the middle of the manufacturing path PS₂. That is, by adding the connection path PSC to the pair of manufacturing paths PS₁ and PS₂, the paths branch into two or more directions.

As shown in Fig. 8B, at the connection position P₁ of the manufacturing path PS₁ with the connection path PSC, the manufacturing path PS₁ on either one side or the other side of the manufacturing path PS₁ that sandwiches the connection position P₁ is cut at the connection position P₁. Here, the manufacturing path PS₁ is cut at a right side of the connection position P₁. Similarly, at the connection position P₂ of the manufacturing path PS₂ with the connection path PSC, the manufacturing path PS₂ on either one side or the other side of the manufacturing path PS₂ that sandwiches the connection position P₂ is cut at the connection position P₂. Here, the manufacturing path PS₂ is cut at a left side of the connection position P₂.

As a result, as shown in Fig. 8C, the manufacturing path PS₁ is connected to the connection path PSC at the connection position P₁ and connected to the manufacturing path PS₂ at the connection position P₂. A remaining manufacturing path PS_{1-D} of the manufacturing path PS₁ cut at the connection position P₁ is separated from the original manufacturing path PS₁, and becomes an independent manufacturing path starting from an end position P_{1-A}. Similarly, a manufacturing path PS_{2-D} cut at the connection position P₂ is an independent manufacturing path starting from an end position P_{2-A}. In this way, the connection path PSC can be added to any position other than the end portions of the manufacturing paths.

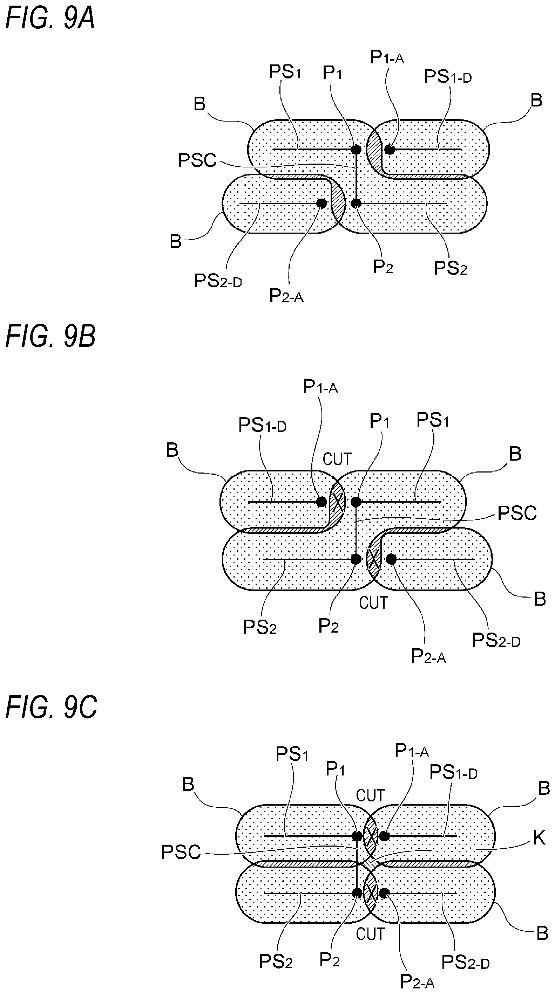

Fig. 9A is an illustrative diagram schematically showing a state of beads formed along respective paths shown in Figs. 8A to 8C.

The pair of manufacturing paths PS₁ and PS₂ are connected by the connection path PSC provided at the connection positions P₁ and P₂, and the manufacturing paths PS_{1-D} and PS_{2-D} are separated from the original manufacturing paths PS₁ and PS₂. In this case, beads B of the manufacturing paths PS_{1-D} and PS_{2-D} are disposed so as to overlap a part of the beads B of the connected manufacturing paths PS₁ and PS₂ having an inverted S-shape. As a result, a gap between the paths is filled with beads.

Fig. 9B is an illustrative diagram schematically showing the beads formed when cutting positions of the manufacturing paths PS₁ and PS₂ are different from cutting positions shown in Figs. 8A to 8C.

As shown in Fig. 9B, when the manufacturing path PS₁ is cut at the left side of the connection position P₁, the manufacturing path PS₂ is cut at the right side of the connection position P₂, and the cutting positions are on the opposite side to those shown in Fig. 9A, the beads B of the manufacturing paths PS_{1-D} and PS_{2-D} are disposed to overlap a part of the beads B of the connected S-shaped manufacturing paths PS₂ and PS₁. As a result, the gap between the paths is filled with the beads.

Fig. 9C is an illustrative diagram schematically showing the beads formed when the cutting positions of the manufacturing paths PS₁ and PS₂ are on the same side as the connection positions P₁ and P₂.

As shown in Fig. 9C, when the cutting positions of the manufacturing paths PS₁ and PS₂ are both provided on the right side of the connection positions P₁ and P₂, a rectangular path is formed by the manufacturing paths PS₁, the connection path PSC, and the manufacturing paths PS₂. In this case, a region K where it is difficult to fill the bead B is generated between the manufacturing path PS_{1-D} and the manufacturing path PS_{2-D} facing the connection path PSC. That is, in the case where the paths shown in Figs. 9A and 9B are connected in the S-shape or the inverted S-shape, the paths easily overlap the adjacent beads compared to the case shown in Fig. 9C, and the occurrence of an un-welded defect can be suppressed. In addition, in a case where the form of Fig. 9C is generated in the manufacturing plan, it is possible to reliably fill the region K with the bead by adjusting an increase in the heat input amount, a decrease in a welding speed, an increase in a filler material feeding speed, and the like.

### <Curved Connection Path>

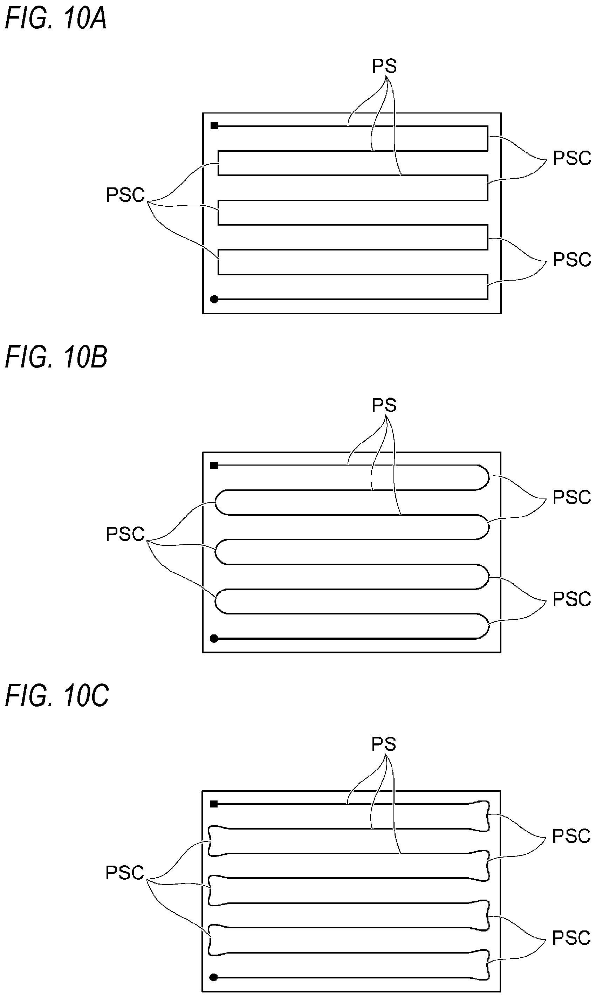

Figs. 10A, 10B, and 10C are illustrative diagrams showing types of connection paths that connect raster-shaped manufacturing paths.

In the additive manufacturing of the manufactured object, a bead layer having a shape obtained by dividing the manufactured object into layers is produced by mainly forming a bead along raster-shaped manufacturing paths PS. The term "raster shape" used here means a state in which a plurality of linear manufacturing paths PS are arranged parallel to each other at equal intervals. In the raster-shaped manufacturing path PS, the end portions of the linear manufacturing paths are connected to each other by the connection path PSC. That is, the connection path PSC is connected to a start point or an end point of a plurality of rows of manufacturing paths PS as the connection position. As a result, the end portions adjacent to each other are connected to each other, and the manufacturing paths arranged in the raster shape are efficiently connected to each other.

In addition to the connection path PSC being a straight line connecting the end portions of the manufacturing paths described above in a rectangular shape as shown in Fig. 10A, the connection path PSC may be an arc-shaped path shown in Fig. 10B, or may be a path formed of a curve having a plurality of curvatures shown in Fig. 10C. By incorporating the curve into the shape of the connection path PSC, it is possible to adjust the overlap amount between the adjacent manufacturing paths or the overlap amount between the manufacturing path and the wall portion (not shown) at the portion of the connection path PSC, and it is possible to more reliably prevent the occurrence of the un-welded defect.

### <Multiple Annular Manufacturing Path>

Next, a procedure of connecting the manufacturing paths in a case where the manufacturing paths of a bead layer having a layer shape are arranged in a multiple annular shape will be described.

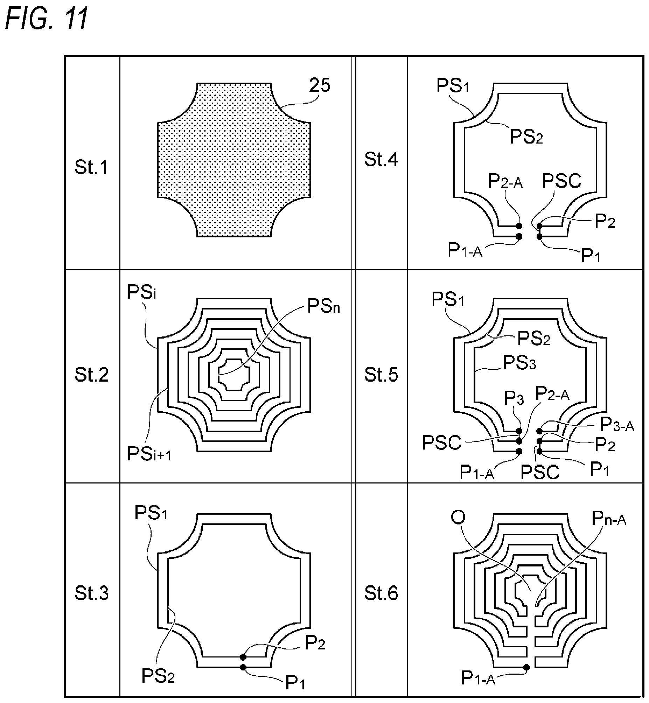

Fig. 11 is an illustrative diagram showing a changing procedure of a multiple annular manufacturing path in stages.

First, as shown in St. 1 of Fig. 11, the manufacturing information acquisition unit 17 obtains a layer shape obtained by dividing a model of the manufacturing shape into layers according to the height of the weld bead. Then, as shown in St. 2, by decomposing the obtained layer shape into the shape of the weld bead, the multiple annular manufacturing path PSᵢ (i being 1 to n) in which a plurality of paths are concentrically arranged for forming the layer shape by the weld bead is obtained.

Next, the connection position specifying unit 19 extracts a pair of manufacturing paths PSᵢ and PSᵢ₊₁ that are arranged adjacent to each other and have a continuous formation order from the plurality of manufacturing paths PSᵢ shown in St. 2. Here, as shown in St. 3, the manufacturing path PS₁ and the manufacturing path PS₂ are extracted in order from an outer circumferential side of the layer shape. Then, the connection position specifying unit 19 specifies any positions of the manufacturing paths PS₁ and PS₂ as the connection positions P₁ and P₂.

As shown in St. 4, the manufacturing path connection unit 21 sets the connection path PSC connecting the connection position P₁ to the connection position P₂ of the pair of manufacturing paths PS₁ and PS₂ as one continuous path connected to the manufacturing paths PS₁ and PS₂. Here, the end portions of the remaining paths after cutting the manufacturing paths PS₁ and PS₂ are shown as end positions P_{1-A} and P_{2-A}.

For the manufacturing path PS₂ and the manufacturing path PS₃ on a further inner circumferential side, the connection position specifying unit 19 specifies the connection position P₃ in the vicinity of the added end position P_{2-A} and specifies the end position P_{2-A} and the connection position P₃ as new connection positions. The manufacturing path connection unit 21 sets the connection path PSC connecting the end position P_{2-A} to the connection position P₃ as one continuous path connected to the manufacturing path PS₂ and the manufacturing path PS₃.

In this way, the manufacturing paths PS₁ to PSₙ are cut and connected from the outer circumferential side to the inner circumferential side of the layer shape, thereby forming one path from the end position P_{1-A} of the manufacturing path PS₁ to an end position P_{n-A} of the manufacturing path PSₙ. Accordingly, the layer shape can be continuously manufactured by one path including the connection paths PSC along a radial direction from an annular center (a center of the layer shape) O. Note that the above processing is not limited to finally setting the number of paths to one as long as the original number of paths n is reduced.

### <Another Example of Multiple Annular Manufacturing Path>

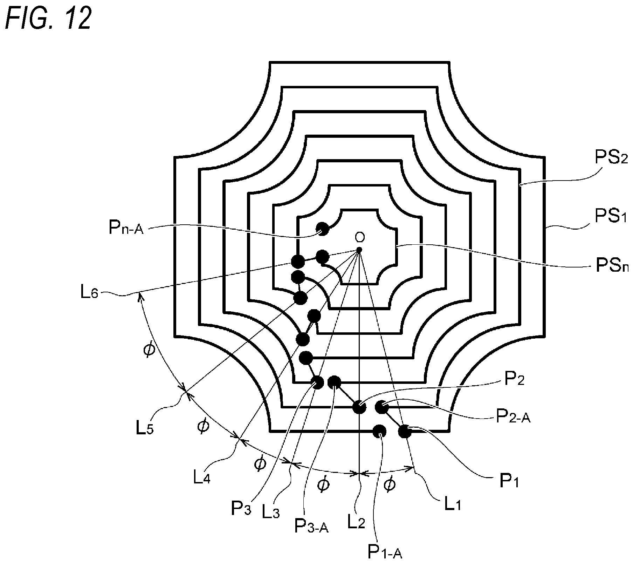

Fig. 12 is an illustrative diagram showing another example of the multiple annular manufacturing path.

In the connection procedure of the paths shown in the above-described Fig. 11, the connection paths PSC are provided along the radial direction from the annular center O; in the case of the multiple annular manufacturing path shown in Fig. 12, the connection positions are made to differ in the annular circumferential direction. Specifically, a virtual straight line L₁ extending in the radially outer side from the annular center O of the paths toward the connection position P₁ of a freely determined manufacturing path PS₁ is set. The end position of the manufacturing path PS₁ cut at the connection position P₁ is defined as P_{1-A}.

Then, the virtual straight line L₁ is fixed at the annular center O, a virtual straight line L₂ is set in a direction in which a central angle at the annular center O is shifted by φ, and an intersection point of the virtual straight line L₂ and the manufacturing path PS₂ is set as the connection position P₂ of the manufacturing path PS₂. The end position of the manufacturing path PS₂ cut at the connection position P₂ is P_{2-A}. The obtained end position P_{2-A} and the connection position P₁ are connected by the connection path PSC.

The above procedure is repeated from the manufacturing path PS₃ to the manufacturing path PSₙ, and the end position P_{n-A} of the manufacturing path PSₙ is obtained. That is, a virtual straight line Lᵢ extending in the radially outer side from the annular center O of the multiple annular manufacturing path PSᵢ is set for each manufacturing path PSᵢ, and the central angle φ at the annular center O between the virtual straight line Lᵢ for a radially inner side manufacturing path and the virtual straight line Lᵢ for a radially outer side manufacturing path is increased in one direction (clockwise in Fig. 12). Then, an intersection point between the manufacturing path PSᵢ and a virtual straight line Lᵢ corresponding to the manufacturing path PSᵢ is extracted as a connection position Pᵢ. Accordingly, one path is manufactured from the end position P_{1-A} of the manufacturing path PS₁ to the end position P_{n-A} of the manufacturing path PSₙ, and the layer shape can be continuously manufactured. In this case, the connection paths PSC are provided at different circumferential positions for each path, and the connection paths PSC can be distributed and arranged. Accordingly, the connection paths PSC are not concentrated at specific positions, and the entire layer can be uniformly formed.

### <Manufacturing Path of Complex Shape>

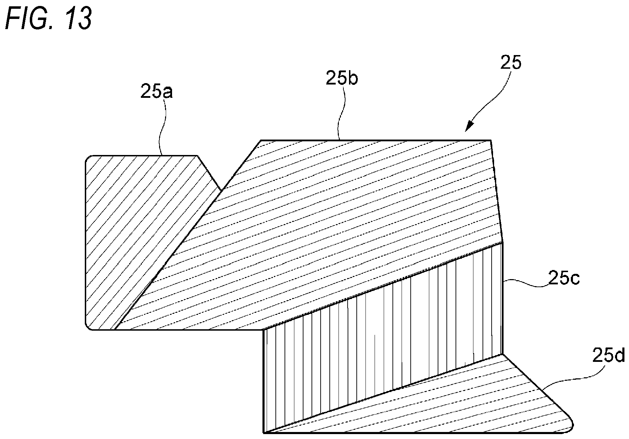

Fig. 13 is an illustrative diagram of a manufacturing path showing a state in which one layer shape 25 is divided into a plurality of blocks.

When the layer shape 25 is complex, the layer shape 25 may be divided into a plurality of blocks 25a, 25b, 25c, and 25d each having a simple shape. Examples of the simple shape include a rectangle, a square, a triangle, a circle, and an ellipse. In this case, in each block, the manufacturing path can be arranged in a raster shape shown in Fig. 13 or in a multiple annular shape (not shown). Therefore, a connection path may be provided between adjacent paths in a block in which the the manufacturing paths have the same direction, and the paths may be connected. Accordingly, even if the layer shape 25 is complex, the layer shape 25 can be manufactured with a small number of paths.

As described above, the present invention is not limited to the above-described embodiments, and combinations of the respective configurations of the embodiments and changes and applications made by those skilled in the art based on the description of the specification and well-known techniques are also intended for the present invention and are included in the scope of protection.

As described above, the present specification discloses the following matters.
(1) A control information generating device that repeatedly forms a bead layer having a layer shape using a bead formed by adding a molten processing material to a manufacturing target surface while moving a processing position along manufacturing paths set in advance, and generates control information for controlling an additive manufacturing device that manufactures a three-dimensional shape in which the bead layer is deposited, the device including:
   a manufacturing information acquisition unit configured to acquire information on the manufacturing paths;
   a connection position specifying unit configured to specify, from the acquired information on the manufacturing paths, connection positions at which a pair of manufacturing paths arranged adjacent to each other and having continuous formation order are connected to each other;
   a path connection unit configured to newly add a connection path that connects the pair of manufacturing paths to each other at the connection positions, and connect the pair of manufacturing paths to each other; and
   a control information output unit configured to repeat connection between the manufacturing paths until the number of the manufacturing paths becomes equal to or less than a predetermined upper limit, and output the information on the connected manufacturing paths as the control information.
   According to the control information generating device, the connection position specifying unit specifies the connection positions of the pair of manufacturing paths from the information on the manufacturing paths acquired by the manufacturing information acquisition unit, the path connection unit adds the connection path to the connection positions, and the control information of repeating the processing of connecting the manufacturing paths is output. By performing additive manufacturing based on the control information, it is possible to reduce the number of manufacturing paths and shorten the operation time of arc start and arc end and the manufacturing time. Further, the manufacturing accuracy of the manufactured object can be further improved.
(2) The control information generating device according to the above (1), in which
   the connection position specifying unit specifies the connection positions at which a smaller intersection angle of intersection angles between the manufacturing path and the connection path connected to the manufacturing path is equal to or greater than a predetermined specified angle.
   According to the control information generating device, in a connection portion between the manufacturing path and the connection path, the occurrence of a cavity and the change in bead height and width are less likely to occur at the time of bead formation.
(3) The control information generating device according to the above (1), in which
   the connection position specifying unit specifies, as the connection positions, a set in which an inter-point distance connecting end points is the shortest, of both end points of the manufacturing path and both end points of a manufacturing path adjacent to the manufacturing path.
   According to the control information generating device, the manufacturing path and the connection path are connected at the shortest distance, and manufacturing efficiency is further enhanced.
(4) The control information generating device according to the above (1), in which
   the connection position specifying unit selects any two points from among a plurality of points on the manufacturing path and a plurality of points on a manufacturing path adjacent to the manufacturing path, and specifies the connection positions according to at least one feature of an angle between a vector in a moving direction of the manufacturing paths at the two selected points and the direction of a connection line of the two points and an inter-point distance when the two points are connected.
   According to the control information generating device, the position at which the manufacturing path and the connection path are connected is not limited to a path end portion, and can be set at the most efficient position, and the manufacturing efficiency can be enhanced.
(5) The control information generating device according to the above (1) or (2), in which
   in a case where an interval between end portions of the pair of manufacturing paths and another manufacturing path or an installed object that the pair of manufacturing paths abut on when the pair of manufacturing paths extend in a longitudinal direction is equal to or less than a predetermined specified distance, the connection position specifying unit shortens a path length by shifting the end portions of the manufacturing paths in a direction away from the other manufacturing path or the installed object, and specifies the end portions of the shortened manufacturing paths as the connection positions.
   According to this control information generating device, the occurrence of a cavity and changes in bead height and width are less likely to occur between the end portion of the manufacturing path and another manufacturing path or an installed object. Further, since a path length is shortened, the total length of all the paths does not significantly increase compared to before the connection, and thus an excessive increase in the volume of the bead to be filled can be prevented.
(6) The control information generating device according to the above (1), in which
   in a case where the manufacturing paths are branched into two or more directions by adding the connection path to the pair of manufacturing paths, the path connection unit cuts the manufacturing path at the connection position on either one side or the other side of the connection path that sandwiches the connection position.
   According to the control information generating device, the connection path can be added to any position other than the end portions of the manufacturing paths.
(7) The control information generating device according to any one of the above (1) to (6), in which
   the manufacturing paths are arranged in a raster shape, and
   the connection position specifying unit extracts a start point or an end point of a plurality of the manufacturing paths arranged side by side as the connection position.
   According to the control information generating device, each of the manufacturing paths arranged in a raster shape can be efficiently connected by the connection path.
(8) The control information generating device according to any one of the above (1) to 6), in which
   the manufacturing paths are arranged in a multiple annular shape, and
   the connection position specifying unit connects a cutting position at which a part of the manufacturing path is cut to another adjacent manufacturing path by the connection path.
   According to the control information generating device, each of the manufacturing paths arranged in the multiple annular shape can be efficiently connected by the connection path.
(9) The control information generating device according to the above (8), in which
   the connection position specifying unit sets a virtual straight line extending in a radially outer side from an annular center of the multiple annular manufacturing path for each of the manufacturing paths, increases a central angle at the annular center between the virtual straight line for a radially inner side manufacturing path to the virtual straight line for a radially outer side manufacturing path in one direction, and extracts an intersection point between the manufacturing path and the virtual straight line corresponding to the manufacturing path as the connection position.
   According to the control information generating device, the connection paths are provided at different circumferential positions for each path, and the connection paths can be distributed and arranged. Accordingly, the connection paths PSC are not concentrated at specific positions, and the entire layer can be uniformly formed.
(10) A control information generating method of repeatedly forming a bead layer having a layer shape using a bead formed by adding a molten processing material to a manufacturing target surface while moving a processing position along manufacturing paths set in advance, and generating control information for controlling an additive manufacturing device that manufactures a three-dimensional shape in which the bead layer is deposited, the method including:
   acquiring information on the manufacturing paths;
   specifying, from the acquired information on the manufacturing paths, connection positions at which a pair of manufacturing paths arranged adj acent to each other and having continuous formation order are connected to each other;
   newly adding a connection path that connects the pair of manufacturing paths to each other at the connection positions, and connecting the pair of manufacturing paths to each other; and
   repeating connection between the manufacturing paths until the number of the manufacturing paths becomes equal to or less than a predetermined upper limit, and outputting the information on the connected manufacturing paths as the control information.
   According to the control information generating method, the connection positions of the pair of manufacturing paths are specified from the acquired information on the manufacturing paths, the connection path is added to the connection positions, and the control information of repeating the processing of connecting the manufacturing paths is output. By performing additive manufacturing based on the control information, it is possible to reduce the number of manufacturing paths, and shorten the operation time of arc start and arc end and the manufacturing time. Further, the manufacturing accuracy of the manufactured object can be further improved.
(11) A program that repeatedly forms a bead layer having a layer shape using a bead formed by adding a molten processing material to a manufacturing target surface while moving a processing position along manufacturing paths set in advance, and generates control information for controlling an additive manufacturing device that manufactures a three-dimensional shape in which the bead layer is deposited, the program causing a computer to execute:
   a function of acquiring information on the manufacturing paths;
   a function of specifying, from the acquired information on the manufacturing paths, connection positions at which a pair of manufacturing paths arranged adjacent to each other and having continuous formation order are connected to each other;
   a function of newly adding a connection path that connects the pair of manufacturing paths to each other at the connection positions, and connecting the pair of manufacturing paths to each other; and
   a function of repeating connection between the manufacturing paths until the number of the manufacturing paths becomes equal to or less than a predetermined upper limit, and outputting the information on the connected manufacturing paths as the control information.
   According to this program, the connection positions of the pair of manufacturing paths are specified from the acquired information on the manufacturing paths, the connection path is added to the connection positions, and the control information of repeating the processing of connecting the manufacturing paths is output. By performing additive manufacturing based on the control information, it is possible to reduce the number of manufacturing paths, and shorten the operation time of arc start and arc end and the manufacturing time. Further, the manufacturing accuracy of the manufactured object can be further improved.

The present application is based on Japanese Patent Application No. 2022-114006 filed on July 15, 2022, the contents of which are incorporated herein by reference.

### REFERENCE SIGNS LIST

11 control information storage unit
13 additive manufacturing device
15 control unit
17 manufacturing information acquisition unit
19 connection position specifying unit
21 manufacturing path connection unit
23 control information output unit
25 layer shape
25a, 25b, 25c block
31 wall portion
100 control information generating device
200 additive manufacturing system
PS manufacturing path
PSC connection path
P₁, P₂, P₃ connection position

## Claims

1. A control information generating device that repeatedly forms a bead layer having a layer shape using a bead formed by adding a molten processing material to a manufacturing target surface while moving a processing position along manufacturing paths set in advance, and generates control information for controlling an additive manufacturing device that manufactures a three-dimensional shape in which the bead layer is deposited, the device comprising:
a manufacturing information acquisition unit configured to acquire information on the manufacturing paths;
a connection position specifying unit configured to specify, from the acquired information on the manufacturing paths, connection positions at which a pair of manufacturing paths arranged adjacent to each other and having continuous formation order are connected to each other;
a path connection unit configured to newly add a connection path that connects the pair of manufacturing paths to each other at the connection positions, and connect the pair of manufacturing paths to each other; and
a control information output unit configured to repeat connection between the manufacturing paths until the number of the manufacturing paths becomes equal to or less than a predetermined upper limit, and output the information on the connected manufacturing paths as the control information.

2. The control information generating device according to claim 1, wherein
the connection position specifying unit specifies the connection positions at which a smaller intersection angle of intersection angles between the manufacturing path and the connection path connected to the manufacturing path is equal to or greater than a predetermined specified angle.

3. The control information generating device according to claim 1, wherein
the connection position specifying unit specifies, as the connection positions, a set in which an inter-point distance connecting end points is the shortest, of both end points of the manufacturing path and both end points of a manufacturing path adjacent to the manufacturing path.

4. The control information generating device according to claim 1, wherein
the connection position specifying unit selects any two points from among a plurality of points on the manufacturing path and a plurality of points on a manufacturing path adjacent to the manufacturing path, and specifies the connection positions according to at least one feature of an angle between a vector in a moving direction of the manufacturing paths at the two selected points and the direction of a connection line of the two points and an inter-point distance when the two points are connected.

5. The control information generating device according to claim 1, wherein
in a case where an interval between end portions of the pair of manufacturing paths and another manufacturing path or an installed object that the pair of manufacturing paths abut on when the pair of manufacturing paths extend in a longitudinal direction is equal to or less than a predetermined specified distance, the connection position specifying unit shortens a path length by shifting the end portions of the manufacturing paths in a direction away from the other manufacturing path or the installed object, and specifies the end portions of the shortened manufacturing paths as the connection positions.

6. The control information generating device according to claim 1, wherein
in a case where the manufacturing paths are branched into two or more directions by adding the connection path to the pair of manufacturing paths, the path connection unit cuts the manufacturing path at the connection position on either one side or the other side of the connection path that sandwiches the connection position.

7. The control information generating device according to any one of claims 1 to 6, wherein:
the manufacturing paths are arranged in a raster shape; and
the connection position specifying unit extracts a start point or an end point of a plurality of the manufacturing paths arranged side by side as the connection position.

8. The control information generating device according to any one of claims 1 to 6, wherein:
the manufacturing paths are arranged in a multiple annular shape; and
the connection position specifying unit connects a cutting position at which a part of the manufacturing path is cut to another adjacent manufacturing path by the connection path.

9. The control information generating device according to claim 8, wherein
the connection position specifying unit sets a virtual straight line extending in a radially outer side from an annular center of the multiple annular manufacturing path for each of the manufacturing paths, increases a central angle at the annular center between the virtual straight line for a radially inner side manufacturing path to the virtual straight line for a radially outer side manufacturing path in one direction, and extracts an intersection point between the manufacturing path and the virtual straight line corresponding to the manufacturing path as the connection position.

10. A control information generating method of repeatedly forming a bead layer having a layer shape using a bead formed by adding a molten processing material to a manufacturing target surface while moving a processing position along manufacturing paths set in advance, and generating control information for controlling an additive manufacturing device that manufactures a three-dimensional shape in which the bead layer is deposited, the method comprising:
acquiring information on the manufacturing paths;
specifying, from the acquired information on the manufacturing paths, connection positions at which a pair of manufacturing paths arranged adj acent to each other and having continuous formation order are connected to each other;
newly adding a connection path that connects the pair of manufacturing paths to each other at the connection positions, and connecting the pair of manufacturing paths to each other; and
repeating connection between the manufacturing paths until the number of the manufacturing paths becomes equal to or less than a predetermined upper limit, and outputting the information on the connected manufacturing paths as the control information.

11. A program that repeatedly forms a bead layer having a layer shape using a bead formed by adding a molten processing material to a manufacturing target surface while moving a processing position along manufacturing paths set in advance, and generates control information for controlling an additive manufacturing device that manufactures a three-dimensional shape in which the bead layer is deposited, the program causing a computer to execute:
a function of acquiring information on the manufacturing paths;
a function of specifying, from the acquired information on the manufacturing paths, connection positions at which a pair of manufacturing paths arranged adjacent to each other and having continuous formation order are connected to each other;
a function of newly adding a connection path that connects the pair of manufacturing paths to each other at the connection positions, and connecting the pair of manufacturing paths to each other; and
a function of repeating connection between the manufacturing paths until the number of the manufacturing paths becomes equal to or less than a predetermined upper limit, and outputting the information on the connected manufacturing paths as the control information.
